# EUROPEAN PATENT APPLICATION

(11) **EP 1 022 203 A2**
(43) Date of publication of application: **26.07.2000**
(21) Application number: 99940201.9
(22) Date of filing: 06.08.1999
(51) Int. Cl.: B60T 7/00

(54) **CABLE TENSIONING REGULATOR**

(30) Priority: 06.08.1998 ES 9801696
(71) Applicant: BATZ, S. COOP. LTDA., E-48140 Igorre (Bizkaia) (ES)
(72) Inventor: PALACIO ARGÜELLES, Joseba, E-48980 Santurtzi (ES)
(74) Representative: Urteaga Simarro, José Antonio
(86) International application number: ES9900257
(87) International publication number: WO0007858

(57) **Abstract**

A tension regulator for cables, that has a lever (29) that turns, connected to a base body (1), which in turn is connected to a cable (10) that extends to the brake for the wheels.

Situated on the base is a spring which is coiled in a spiral and connected to the cable, with one end of the latter connected to a mobile point, avoiding another body that turns on the base in order to lock the cable.

An elongated body, by way of a box and in the direction of the cable, receives in its interior a slide (45), to which the ends of the said cable are connected, with the internal surface of the box being provided with rough surfaces. The slide includes some elliptical parts (47) engaged together to each other and arranged on axes or shafts perpendicular to the slide, with these parts protruding from the sides and with these protruding portions having rough surfaces.

The locking part for the cable is an lever (35) articulated to a portion of the body of the brake, having a rounded and toothed slot that can become housed in a centred window or opening in the box, immobilising the cable.

The elliptical parts can be reduced to one and their rough areas can become a tooth that carries out the function of engaging with the internal walls of the box.

## Description

This invention relates to a tension regulator for cables, particularly, although not exclusively, applicable to the regulation or adjustment of the cable in the brake levers in automobile vehicles

In brakes of this type, the parking brake lever is connected to a cable that runs to the brake system of the wheels of the vehicle, in which it occurs that the slackening of this cable produces irregularities in the braking, making it necessary to provide a system or device that regulates the tension of the cable at all times.

The general technique used in this application is that of operating on the cable or on a rod connected to it at the start of the system, so that a device is made to act on the said cable or rod that enables, when the cable has become detautened or slack, the device in question facilitates the movement of the said cable or of the rod towards the brake lever, while at the same time prevening it from moving in the opposite direction, with which permanent regulation or adjustment of the braking capacity is achieved.

Already known within this technique, by means of EP.A.0040574 and EP.A.0754135, is a regulation device based on an element by way of a box with a wedge-shaped or tapered end, inside which a set of facing wedges move and adapt themselves in the corresponding ends of the box. In turn, the wedges have facing toothed areas, between which a rod connected to the cable moves.

Also within this idea, and known by means of US.A. 1,741,365, is a device composed of a toothed rod that travels between two parts, also provided with teeth and obliged by springs against it, which allows the movement of the toothed rod in only one direction.

In general terms, these techniques present a behaviour or action that is limited and do not foresee the setting to zero of the regulation mechanism.

One object of the invention is to provide a tension regulator for cables that offers a complete safe operation.

Another object of the invention is to provide a regulator which is economical to manufacture.

Another object of the invention is to provide a regulator that allows the mechanism to be set to zero in an extraordinarily easy manner.

In order to achieve these objectives, the regulator in the invention starts from a mechanism composed of a lever that turns, connected to a base body and on this same base body. The latter is connected to a cable whose most distant end is connected to the braking device, for instance the brake shoes or pads of the wheels of an automobile vehicle.

The base body includes a spring connected directly to the cable or to an initial rod connected to the cable.

The spring has a logical tendency to pull on the cable, so that it acts against the braking system. However, due to the successive operation of moving the lever, the cable goes slack and loses its effectiveness.

The base body, in accordance with the invention, is provided with a spring coiled in a spiral with one of its ends fixed to the base body and with the other end connected to the cable or with a portion of screw-threaded or toothed rod arranged at the start of the said cable.

The cable runs through the hollow interior of an elongated box which is fixed to the base body or forms a part of the base body itself. A slide moves in the interior of the box, suitable fitted between the sides of the box and connected to the cable.

The connection of the cable to the slide is carried out by splitting the cable, so that its ends are connected to the beginning and to the end of the said slide. Between both ends, the slide has two elliptically shaped parts mounted on parallel shafts or axes and perpendicular to the horizontal plane of the slide, which have toothed sides that engage mutually, whereas the outer sides of the same protrude from the sides of the slide towards the walls of the box, and these outer sides can be provided with roughness or teeth so that they can lock into the walls of the box.

The shafts or axes that hold the elliptical parts are located in their centres and on one of their sides, on the side towards the outlet, is a metal strip type spring, shaped, that rests against the side surfaces of both, with this strip in turn being supported on a fixed point on The slide, so that it has a tendency to put pressure on the two elliptical parts in such a way that these remain, in turn, secured against the sides of the box.

In normal conditions, the tension of the spiral spring mounted on the base body and the pressure of the strip type spring mentioned keep the two elliptical parts against the sides of the box, with this portion corresponding to the one in which the cable that runs from the slide to the brake is in normal tension conditions.

When this portion of cable goes slack, the action of the spiral spring overcomes the action of the strip type spring of the slide and this is moved towards the said spiral spring, putting tension on the portion of cable from the slide to the brake or item in question.

The box is also provided with a hole, on the outlet side, that communicates with a slot or groove portion of the slide itself, also made on the outlet side, with a rounded end being housed in these holes by way of a toothed recess cut in the end of a part or lever articulated to the base body of the brake. The end of the lever in question, on turning on this base body, becomes situated over the cable, thus immobilising the unit in the operations of setting to zero or starting of assembly

The outer side surfaces of the two elliptical parts engaged with the slide can be toothed, knurled, grooved or ribbed, etc. In such a way as to facilitate their appropriate linking or connection with the side surfaces of the slide.

The portion of the cable that runs between from the two elliptical parts towards the brake is replaced in an initial area by a pad (false piece) which is provided with suitable means in correspondence with the toothed area of the end of the lever in order to facilitate the immobilisation of the slide and of the cable with the lever in its closed position.

The slide logically has the appropriate means to receive and secure the cable or, if fitted, the cable and the pad.

One variant of this basic solution orf the invention is established based on the elliptical parts having the ends of the sides provided with one single tooth.

In the same way, the slide can include one single elliptical part that is supported on one single side of the box, with the rest being arranged in identical conditions to those described previously.

Also within the same technical idea, the box is formed on its internal sides with teeth, which have a slope or side perpendicular to the longitudinal direction of the box and another inclined towards the base body. Through the interior of this box runs an assembly connected on one side to the cable that comes from the spiral spring of the base body and on the other side to the cable or to the pad that goes towards the brake.

In this assembly are situated two parts of an approximately triangular shape, which at their ends are capable of housing or lodging the teeth of the box. These two parts have central portion folded in correspondence to each other for their planar adjustment and have a pin passing through them and a spring that obliges both parts against the teeth.

Between this assembly and the end of the box on the side of the brake is provided a spring that acts against the two parts when the tension of the cable that protrudes from the box towards the brake decreases due to use. The tension of the spiral spring ranged on the base body obliges the assembly towards the said spiral spring, with which the cable is tightened again and returns to its initial position.

A practical alternative in order to carry out the regulation of the cable, also contemplated by the invention, is also possible with the solution based on flat parts attached by their side surfaces to the base of the circular recesses capable of being fitted onto the cable or otherwise onto the pad (false part) on the cable.

These two parts each have two inclined grooved slots, in a direction that forms an angle with the direction of the cable. These slots are crossed through by pins secured in the box in which the two parts move in an inclined manner, with their shaped sides moving further away from or moving closer to the cable or to the pad.

On the front sides of both pans, on the spiral spring side of the base plate are situated two small springs that put pressure on the said front sides, thus providing tension continuously to both parts in the sense of closing or locking onto the cable.

As with the preceding cases, when the cable becomes slack, the tension of the spiral spring of the base plate opens the two parts, overcoming the resistance of the two small frontal springs and this tightening or tautening the cable.

On the other hand, and within the line described by US.A. 1741365, EP.A. 0040574, and EP.A. 0754135, the box described up to now is replaced by another box which is capable of housing or accommodating the known wedge-shaped parts, with this box also having a wedge-shaped interior in order to take in the two wedges against the cable.

In particular, and in accordance with the solution proposed by the invention, the box includes some wings or fins on the same side as the spiral spring, on which the springs that put frontal pressure on the wedges rest, with the said wing or fin in turn having a centred hole or gap that allows the passage of the cable, on the side of the base body.

On its part, the from faces of the wedges on the narrowest side of the box are linked to some lugs that protrude to the exterior of the said box, which are capable of being operated manually from the exterior in order to manually unlock the assembly.

In addition to al this, the said lugs meet in a projection that provides a surface area to be pressed by the user, which is provided with a central hole that allows, the passage of the cable or of the pad in the direction towards the brake.

At the outlet from this surface projection, the pad can be immobilised for its setting to zero through the lever, as pointed out previously.

Within the same purpose of the invention, it is possible to modify the device referred to up to now, by connecting the turning end of the lever to a pin, on which two casings are received, provided with concentric necks that are settled on the said pin. Both casings have portions with a circular shape, by way of concentric bowls or pans, and also concentric with the previously mentioned necks, in whose interior a spiral spring is received, which is controlled between a protruding lug on the lever body and the side walls of the bowls or pans.

These side walls extend throughout a certain angle following a circular path, during which the said sides take the shape of lugs that protrude towards the exterior, that extend in an inclined manner and alternately arranged in opposite directions, forming a housing or passage for the cable in such a way that the end of the spring becomes fitted between each two of the lugs.

The casings have an area, outside the said bowl-shaped casings, that forms the base of the said facing semicircular portions, between which a cable puller is controlled that has a longitudinal shaft or axis coinciding with that of the space procured between the lugs mentioned previously.

On a projection which is provided, one of the casings receives a locking part. This locking part has a general L-shape with a housing in the internal area of its angle, a housing which is formed by the confrontation between two lugs protruding from the wings of this L-shaped part and in which the previously described projection from one of the casings is received. This easing is, turn, provided with a hole in which the said lugs move.

This locking part has, in its angle and externally, a protruding bulge that becomes housed in a hole cut in the projection, on which it can turn or rotate.

Of the two arms of the locking part, one is of a larger size and is flat and the smaller one is provided with a projecting portion by way of a rim or flange that limits the turning of the said locking part

In one of the positions of the locking part, the external bulge becomes inserted into the hole in the projection mentioned previously, blocking the rotation of the casings and, in the other of the two positions, this inserted area becomes freed, as will be observed later by referring to the accompanying sheet of drawings.

In the direction of the cable and towards the position of the brake, a box similar to the one described previously is situated over one of the lever casings or bodies, that receives a set of wedges, each obliged by springs, that push the wedges against the wedge-shaped end of the said box, in general operating conditions equal to those mentioned.

Also within this latter operating concept, the box with the internal mechanism can be eliminated and replaced by a circular part housed on the pin of the lever and casing, with this circular part being provided with teeth on its side surface and being connected in turn to a pawl provided with teeth that face the teeth on the circular part and this pawl being ranged on the body of the lever.

All these and other details of the invention can be appreciated in greater detail by referring to the accompanying sheets of drawings, in which the following are represented, without any restrictive nature:
- Figure 1 is a plan view of the regulator in the invention, in accordance with the variant provides with two casings.
- Figure 2 shows two views of each one of the wedge-shaped parts included inside the regulation box.
- Figure 3 is an elevation of the bow, showing the wedges in accordance with the invention and the springs that act on them.
- Figure 4 is a perspective view of the box, seen from its rear side.
- Figure 5 is the result of a vertical cross section carried out on Figure 1, including the locking-unlocking part and the centre of the casings.
- Figure 6 represents a side view of the casings, showing the projections or flaps that drive the cable.
- Figure 7 corresponds to the cross section A-A made in Figure 6.
- Figure 8 represents the cross section B-B made in Figure 6.
- Figure 9 shows the variant of the solution shown in Figure 5, with the incorporation of the circular toothed part.
- Figure 10 represents the plan view of the above with the pawl.
- Figure 11 represents another variant of the regulator with the control lever connected to a base body on which the regulation box with the wedges is situated.
- Figure 12 illustrates a perspective of the regulation box provided with wedges in its interior.
- Figure 13 is a perspective of the pad or false part to be incorporated into the cable.
- Figure 14 is a detail of the locking lever for the regulator system for rescuing the system or setting it to zero.
- Figure 15 is an elevation representing the basic solution of the regulator, in accordance with the invention.
- Figure 16 shows the regulation mechanism with the slide provided with two elliptical parts, in enlarged form.
- Figure 17 is a perspective view of the slide shown in Figures 15 and 16.
- Figures 18 and 19 are a variant of the slide shown in Figures 15, 16 and 17.
- Figure 20 is another variant of the above.
- Figures 21 and 22 represent another solution for the regulation that replaces the one shown in Figures 15, 16 and 17.
- Figures 23 and 24 show another alternative solution.

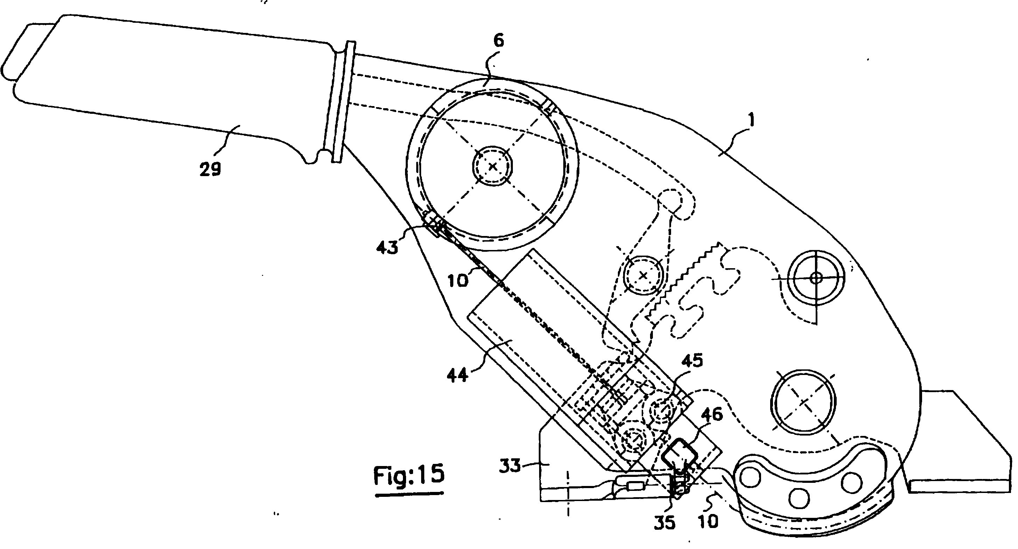

Referring now to Figure 15, we can appreciate the preferred solution for the regulator in accordance with the invention, with a lever (29) connected to a base body (1). On the latter is arranged a spiral spring (6), at whose free end (43) is connected the cable (10) that runs to the brake or mechanism in question, situated at a distant point and not shown. The cable (10) runs through the interior of the box (44) in whose interior a slide (45) moves. On this slide are mounted two elliptical parts (47) responsible for enabling the movement of the said slide.

The cable is connected to the slide by the side on the end (43) connected to the spiral spring (6), with the opposite end of the slide receiving another section of cable that goes to the mechanism to be operated.

The body (1) at one portion (33) receives a lever that turns on the said portion in order to become housed in a window (46) in the slide, allowing the mechanism to be immobilised when it is necessary so that the unit can be set to zero.

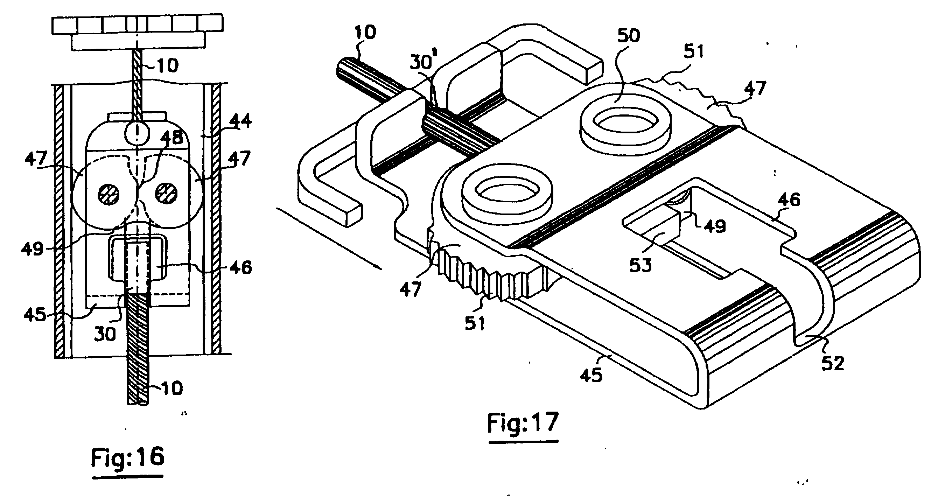

In accordance with Figure 16, a slide (45) can be observed, with the two elliptical parts (47) engaged at (48) and mounted on centred shafts or axes, receiving at their sides on the side towards the outlet the spring or strip (49) that acts against the two elliptical pans. The cable (10) is attached to both ends of the slide, and has a pad or false part (30) at the outlet, as will be described later in greater detail.

In general terms, when the lower section of the cable, that runs to the mechanism to be operated, is found to have a correct tension, the action of the spiral spring (6) in the base body (1) on the upper section of the cable and on that of the strip (49) that acts on the elliptical pans, in the sense of making them turn or rotate towards the internal sides of the box, makes the slide permanently stable.

However, when the tension of the lower section of cable decreases due to its continuous use, the tension of the spiral spring (6) pulls upward on the cable and on the slide, thus managing to tauten or tighten the lower section of the cable.

In Figure 17, the slide (45) shows the two elliptical parts (47) mounted on their shafts or axes (50) and with their toothed sides (51) in order to ensure gripping against the internal side walls of the box (44).

We can appreciate the inner stop (53) for the strip (49) that acts against the two elliptical parts, as well as the window (46) for the passage of the lever (35) that turns on the base body (1) and the end (52) for the outlet of the cable or pad (false part) that runs to the mechanism to be operated.

The upper cable (10), that comes from the spiral spring (6), does so through the intake (30') and is secured or fixed to the slide by any known means.

The window (46) will have correspondence of passage, for example by way of a slot, in the box (44) itself, in order to permit the passage of the lever (35) that immobilises the unit.

There is a U-shaped part attached to the slide and not numbered, which can be operated from the outlet end of the box (44) with a suitable tool, allowing manual tension regulation without changing the cable.

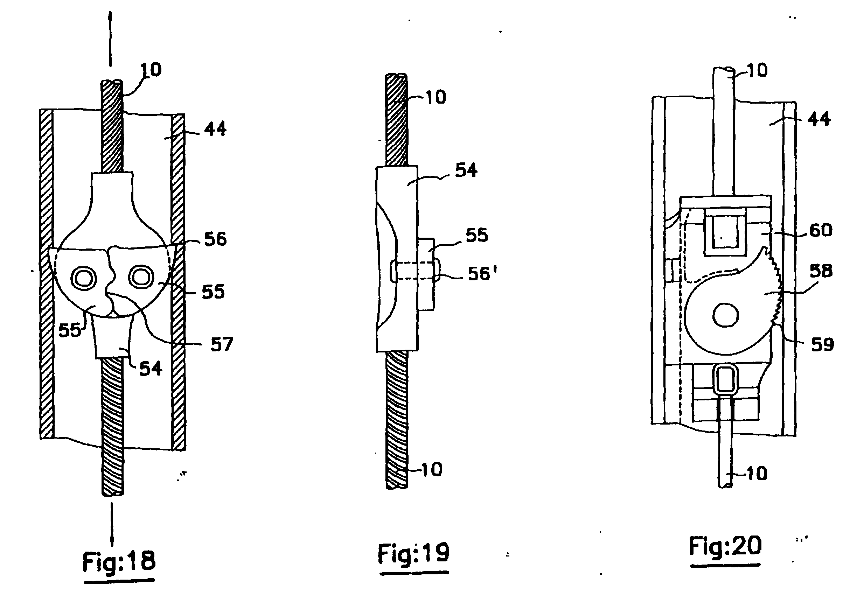

In accordance with Figures 18 and 19, in this variant solution of the above, the two elliptical parts are mounted on a body (54), to which the two ends, inlet and outlet, of the cable are connected, with the two parts having a central engagement (57) and teeth that impinge on the internal side walls of the box (44).

The variant in Figure 20 uses one single elliptical part (58) provided with one toothed side (59) through which the securing of the slide to the box is carried out.

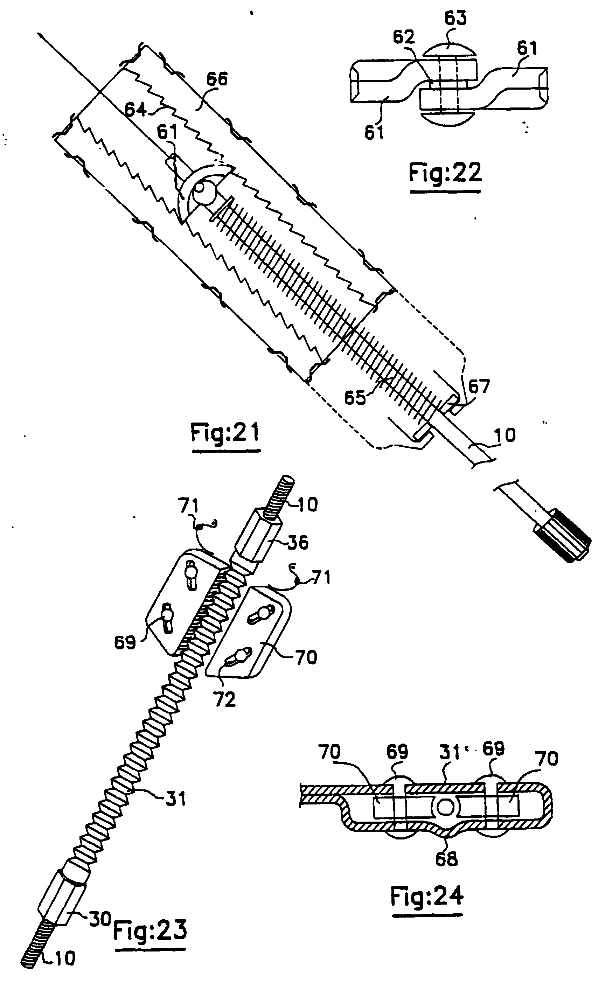

In accordance with Figures 21 and 22, the box (66) is constituted with a special toothed area (64) on which the pointed ends of the two part (61) impinge. These parts are mounted on a joint shaft or axis (63) that connects two of their flat central areas and are obliged by a wring (62) in such a way that it permits the movement of this device only in an upward direction, i.e. towards the spring (6) of the base part (1). In this case, the provision of another spring (65) that is supported on an internal stop (67) assists in the putting into operation of the tightening or tautening of the tower end of the cable when necessary.

The variant shown in Figures 23 and 24 establishes two parts (70) arranged in the same single plane and provided with cut-outs or slots (72) in which shafts or axes (69) are received, with these shafts or axes being secured to the box (68). These parts have toothed areas on their opposing faces that act against the cable, which in this case is not separated by the mechanism. The two parts are pushed against the cable by means of the action of the two springs (71) that act on their frontal area, so that when the lower end of the cable becomes slack, the action of the spiral spring allows this end to be tautened or tightened again.

Exactly as can be appreciated in Figure 23, a pad or false part (30, 31, 36) is situated, connected to the cable itself (10) in such a way that its surface is provided with means that allow the gripping or holding of the two parts (70) with greater security.

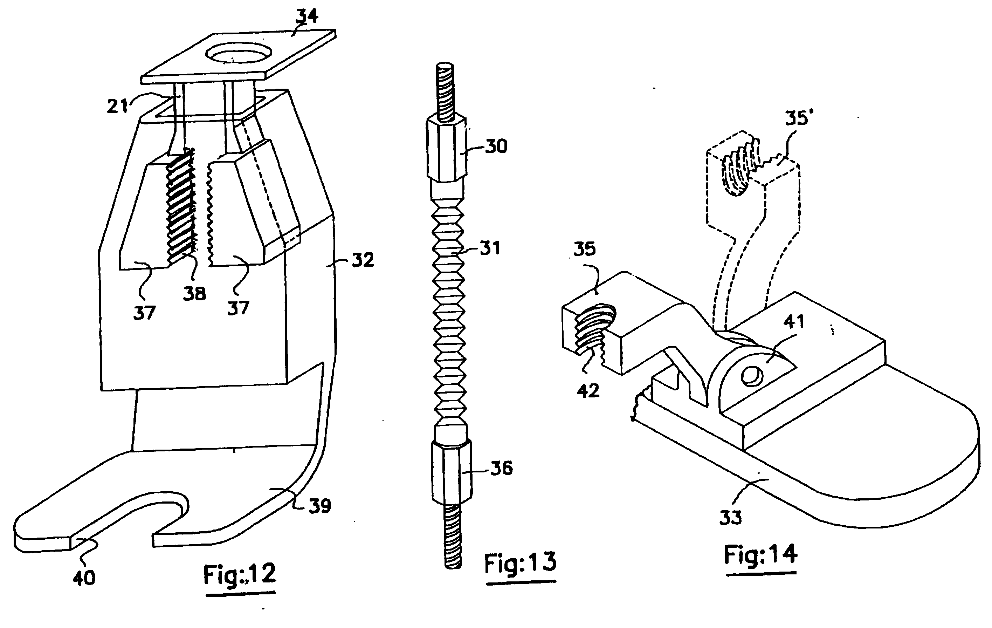

With reference now to Figure 14, the portion (33) of the base body (1) on which the lever (35) that immobilises the regulator can be appreciated. This lever turns at (41) and can adopt either of the two positions of open (35') or closed (35) on the cable (10) or on the corresponding pad or false part, when applicable, on being manually operated when desired. The end of this lever (35) is provided with a rough-surfaced, toothed, screw-threaded semi-cylindrical hollow, etc., in such a way that its connection with the cable or with the pad or false part is effective.

Figure 13 shows us the pad or false part in question with its ends (30, 36) and its central portion (31), screw-threaded, toothed, provided with a rough surface, etc., that favour the operation of the different items whose aim or purpose is to immobilise the regulator system.

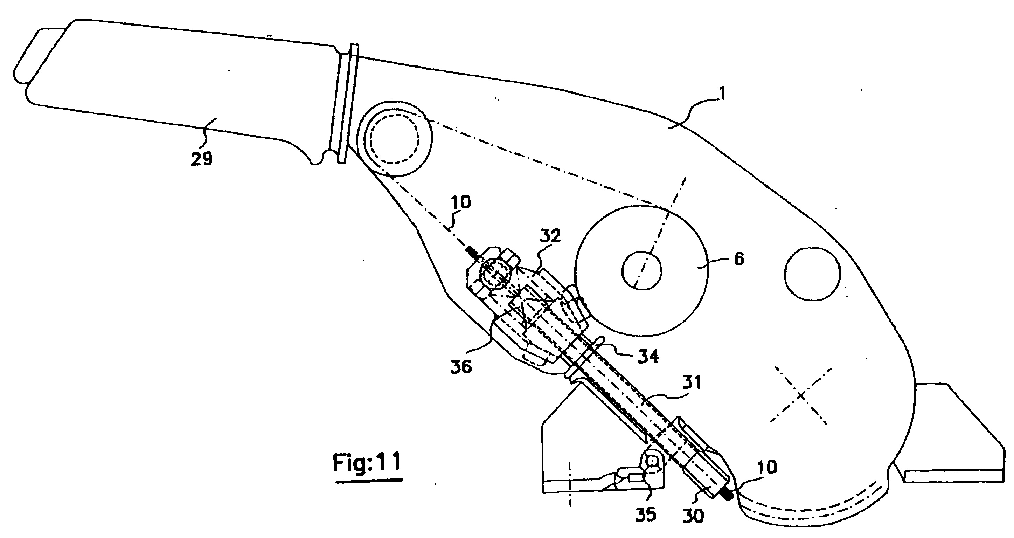

In accordance with Figure 11, the vanant is shown, according to which the lever (29) is shown connected to the base body (1), am well as the spiral spring (6) connected to the cable (10). The cable in this case runs towards a box (32) secured to the body (1), in which are included a set of wedges that clamp onto the cable, preferably to the pad or false part, in a known manner due to the references mentioned previously.

In this hypothesis, the lever that immobilises the system is established in the same way as the one that has been mentioned up to now, and the box (32) has the shape described in Figure 12, with an end (39) provided with a passage (40) for the pad or false part (31) and with the wedges (37) with their facing or opposing areas provided with screw-threading, teeth, etc., with these wedges mutually approaching each other as they are pushed against the wedge-shaped walls of the box. Some spring, not illustrated, act against the wedges in the sense of pushing them against the previously mentioned wedge-shaped walls.

In this case, and as can be appreciated in Figures 11 and 12, the wedges has projections (21) on the side towards the wedge-shaped outlet of the box, which meet at (34), so that they can be operated in order to tighten or tauten the cable manually without having to change it.

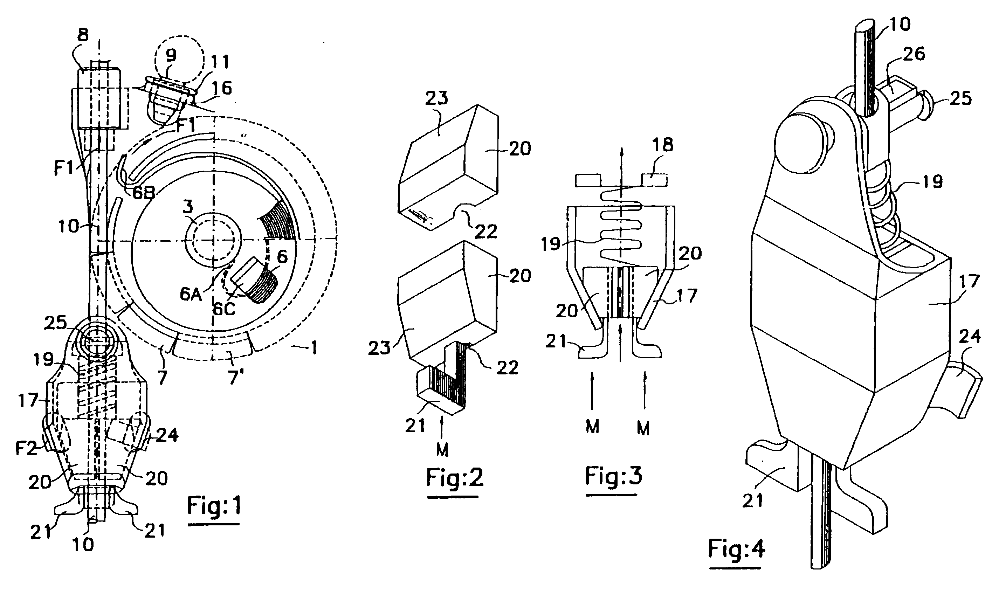

The variant solution of the invention shown in Figures 1 to 5 has, in general terms, a box similar to the one illustrated in Figures 11 and 12, although altering here the shape of the base body and of the locking-unlocking mechanism of the regulator. In accordance with this variant, two casings (4, 5) are formed, with concentric necks received on a pin (3) and the body of the lever (2) also being received on this pin. The two casings (4, 5) have portions with a circular shape that are concentric with the said necks, on which a spiral spring (6) is housed. This spring is controlled between a lug (6C) on the body of the lever and the previously mentioned circular shaped portions.

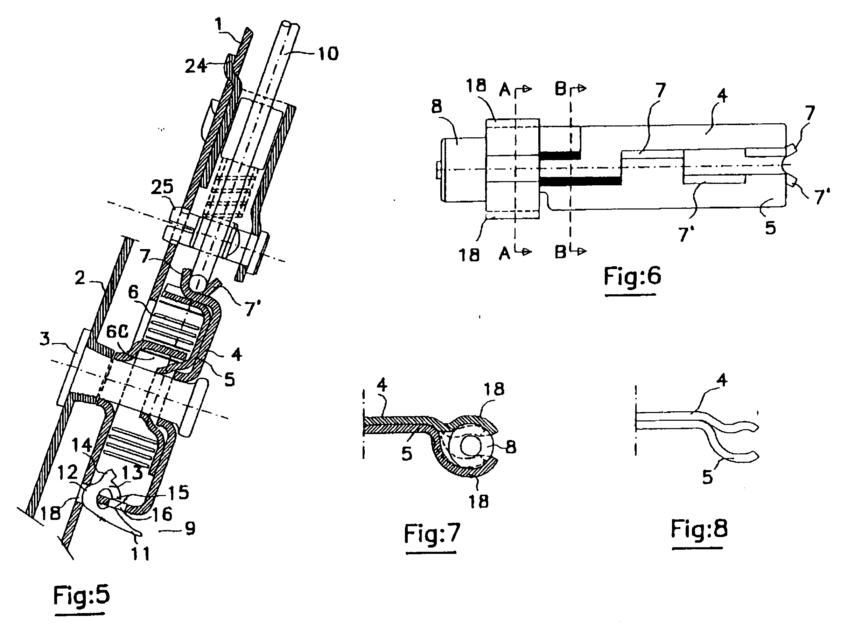

These circular shaped portions extend along an angle, during which some lugs (7, 7') are formed on both portions, in an inclined shape, alternate and protruding outwards, forming a housing (Figures 1 and 6).

The end (6B) of the spring (6) is taken in between two of these lug, (Figure 1) and the two casings (4, 5) have the semicircular areas (18) outside of the bowl-shaped pans, in which the cable puller (8) is received (Figures 1 and 7), whose longitudinal shaft or axis coincides with the space procured between the lug (7, 7') in which the cable (10) moves.

The regulator box (17), which is in alignment with the cable and with the cable puller (B) is mounted on the body (2).

The casing (4) also has the projection (16) Figures 1 and 5), onto which the locking part (9), which is generally L-shaped, is received by clipping them together. The projection (16) is provided with a hole, in which the two lugs (15) of the said locking pan move, which enables the locking part to turn.

The part (9) also has a protruding outer portion (2) which is capable of being received in a hole (18) in the body of the lever (2).

The other arm (11) is essentially flat as can be observed, and can be operated from the exterior so that by turning the part (9), its portion (12) is inserted into or extracted from the hole (18) in the body (2). When it is housed or inserted, locking if the system takes place, whereas when it is dislodged or extracted, unlocking occurs.

Figure 6 allows us to appreciate, in the side view of the bowl shaped casings (4, 5), the alternate arrangement of the inclined bags (7, 7'), as well as the portions (18) that take in the puller (8).

The regulator box (17) is illustrated in Figures 1, 3, 4 and 5, and is an item which is already known in itself, as stated previously. It has wedge-shaped or tapered walls, on which the wedges (20) are supported when obliged or pushed by the spring (19) against these walls, so that they take in between them the pad or false part connected to the cable (10).

In particular, the spring (19) is supported on the transversal pin (25) of the box itself, which in turn is provided with a passage space for the cable (10).

The wedges (20) also have the bags (21) that can be operated from the exterior, according to (M), it order to proceed with manual tightening or tautening without changing the cable.

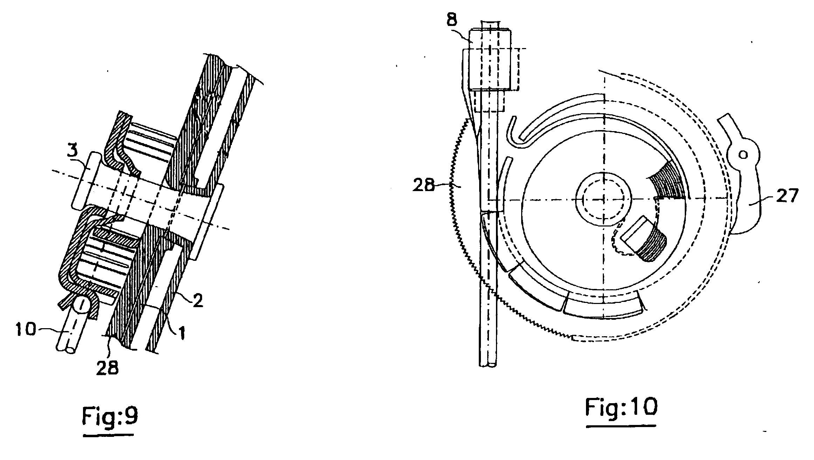

With reference finally to Figures 9 and 10, we point out the variant consisting of incorporating a circular pan (28), also housed on the pin (3), whose side surface is provided with teeth. Connected to this circular part, a pawl (27) is arranged, connected to the body of the lever. In this particular case, the provision of the box (17) is not necessary, as it is the joint action of the circular part (28) with the corresponding spring and with the pawl (27), that performs the tightening of the section of cable that runs to the mechanism in question.

In the whole of the assembly in the invention, the boxes (44, 32, 17) can be made of any kind of material, metallic, plastic, etc. And can also form part of the base body of the lever or be an independent unit provided with lugs for its connection to the said base body by clipping together, for instance.

## Claims

1. Tension regulator for cables, in which any detensioning or slackening of the cable is corrected in a continuous manner, particularly in handbrake levers, with a lever (29) that pivots and is connected to a base body (1), with the said body being connected to a cable (10) whose most distant end is connected to a brake mechanism, with means based on wedge-shaped parts (20) provided with toothed semicircular ducts or passages that adjust to or engage with a toothed part arranged on the cable, with a spring (19) that presses the said wedges against the toothed part, allowing the movement of the cable for it to be tightened in direction towards the body, which is characterised by,
- a spring (6) wound in a spiral and arranged on the base body (1) in order to provide tension on the cable,
- an end (43) of the cable (10) connected to a mobile point that is moved by the tension of the cable,
- a body (33) that turns in relation with the base body in order to lock the cable,
- an elongated box, connected to the body (1) and arranged in the direction towards the cable, rectangular in shape in its transversal direction, with at least one of its internal side walls (44) provided preferably with rough surfaces, inside which a slide (45) moves, with the ends of this slide being connected to the ends of the cable, one of which comes from the spring while the other runs to the mechanism to be operated, in which the slide is provided with some approximately elliptical parts (47) engaged together and protruding from the sides of the said slide, which are mounted in a longitudinal plane parallel to the box and on transversal centred pins, with a strip type spring (49) that acts against the side surfaces of both on being supported on a fixed central rib or flange (53) of the slide body itself, with the protruding side portions of the two elliptical parts being provided with rough surfaces corresponding to those of the box and with the end of the slide, on the side towards the mechanism, having a centred window or opening (46) in order to receive the locking part for the cable,
- the locking part for the cable is a lever (35) articulated to a portion (33) of the body of the brake, whose end has a rounded and toothed slot or recess that becomes housed in the centred window of the box, immobilising the cable on locking or clamping onto it.

2. Tension regulator for cables, in accordance with claim 1, characterised in that the slide includes one single elliptical part (58) that protrudes sideways towards one side of the side wall of the box, with the said protruding end and said side wall being provided with corresponding rough surfaces.

3. Tension regulator for cables, in accordance with claim 1, characterised in that the protruding or projecting ends of the elliptical parts have at least one tooth that becomes engaged in the corresponding toothed area of the sides of the box.

4. Tension regulator for cables, in accordance with claim 1, characterised in that the box is provided with teeth (64) on its sides, with one transversal area, perpendicular to the direction of the cable and with its face inclined and forming an acute angle with that of the direction of the body, with an assembly or unit moving inside the box and connected to the cable that consists of two parts (61) provided with side ends equipped with teeth capable of becoming lodged in the those of the box, in that these two parts have central portions bent or folded in accordance with each other for their planar adjustment by means of a common pin (63) and a spring that pushes or obliges the two parts against the toothed area of the box, while also including another longitudinal spring controlled between the said assembly sad an internal stop in the box, on the side closer to the brake.

5. Tension regulator for cables, in accordance with claim 1, characterised in that the box that takes in the wedge shaped part (20) provided with associated toothed channels against the toothed part connected to the cable, have a fin or wing (34) on the same side as the outlet of the cable towards the spring, on which the springs that act against the wedges are supported, with this fin being provided with a central hollow or gap that allows the passage of the cable, and having at the other end a linked unlocking part with two logs (21) that are supported internally on to smaller front sides of the wedges, protruding to the outside of the box from the surface area of the said unlocking part for its manual operation, in that the lever articulated to the body locks or claps the toothed pert outside the already mentioned unlocking part.

6. Tension regulator for cables, in accordance with claim 1, characterised in that
- the body of the brake has a pin (3) on which two casings (4, 5) are received, provided with concentric necks that fit onto the said pin, with these casings having some circular shaped portions by way of bowls, which in turn are concentric with the necks, inside which a spiral spring (6) is received and is controlled between a lug (66) protruding from the body of the lever and the side walls of the bowls, in that these side walls extend throughout a certain angle, knowing a circular path, during which the said sides take the shape of outwardly protruding logs (7, 7'), that extend in an inclined manner and alternately arranged in opposite directions, so that they form a housing or passage for the cable, and with the end of the spring becoming fitted between two of the said lugs, in that the casings have an area, outside the said bowl-shaped casings, that focus the base of the said facing semicircular portions (18), between which a cable puller (8) is controlled that has a longitudinal shaft or axis coinciding with that of the space procured between the lugs,
- a locking part (9) received by clipping together on a projection of one of the casings, which has a general L-shape with a housing in the internal area of its angle, which is formed by two facing protruding logs (15) from its two arms, which are received in a hole (16) cut in the projection, on which the locking part can turn, in that the exterior of the smaller arm has a protruding portion (12) capable of becoming housed in a hole in the body of the lever, whereas the larger arm is flat,
- a box that receives the wedges and through which the cable passes, arranged in alignment with the cable puller, in which the spring that operates the wedges is supported on a transversal pin (25) of the box itself, provided with a hole for the passage of the cable, with the two wedges provided with L-shaped lugs that protrude towards the exterior of the box on the side closer to the brake.

7. Tension regulator for cables, in accordance with claim 6, characterised in that the box with its internal mechanism is replaced by a circular part (28) housed on the pin of the lever and casings, whose outer surface is provided with teeth, and with this part making a connection with a pawl (27) provided with teeth facing those of the said part, and with this pawl being situated on the body of the lever.

8. Tension regulator for cables, in accordance with claim 5, characterised in that the side walls of the casings in the bowl-shaped portion, in which the lugs are made, extends throughout a circular portion, occupying a variable angular area.

9. Tension regulator for cables, in accordance with claim 6, characterised in that the locking part can be secured to any projection or protrusion from the casings carried out for this purpose, in a perpendicular direction to the body of the lever.

10. Tension regulator for cables, in accordance with claims 1 and 5, characterised in that the box through which the cable passes receives two pairs of pins (69) on its larger sides, with these pins passing through two pairs cut-outs or slots (72) which are inclined or slanting, with respect to the direction of the cable, cut in two parts that are opposite each other with their toothed edges again the cable, and with the casing having two springs (71) that act against the fronts of both pans.

11. Tension regulator for cables, in accordance with claim 1, 5 and 10, characterised in that the box forms an integral part of the body of the lever.

12. Tension regulator for cables, in accordance with claim 1, 5 and 10, characterised in that the box is a unit independent of the body of the lever and is joined to it by any known means.

13. Tension regulator for cables, in accordance with claim 1 and 10, characterised in that the spring is contained in a plane pallet to the body of the lever, secured to this said body by any means, and turns on an axis perpendicular to the said body.

14. Tension regulator for cables, in accordance with claim 1 and 10, characterised in that the spring is mounted on an axis theoretically parallel to the body and contained, compressed, in a casing provided with a longitudinal slot, through which the connection at the end of the cable is carried out.
